# EUROPEAN PATENT APPLICATION

(11) **EP 4 482 010 A1**
(43) Date of publication of application: **25.12.2024**
(21) Application number: 24174855.7
(22) Date of filing: 08.05.2024
(51) Int. Cl.: H02M 1/32, H02J 1/10, H02M 1/36, H02M 3/158

(54) **POWER SUPPLY UNIT AND POWER SUPPLY SYSTEM WITH SAME**

(30) Priority: 20.06.2023 US 202363521951 P; 06.03.2024 CN 202410251804
(71) Applicant: Delta Electronics, Inc., Taoyuan City 33370 (TW)
(72) Inventor: Lai, Chien-An, 32063 Taoyuan City (TW); Tsai, Lin-Ya, 32063 Taoyuan City (TW); Hsu, Chang-Yuan, 32063 Taoyuan City (TW)
(74) Representative: Uexküll & Stolberg

(57) **Abstract**

A power supply unit (2) includes an input terminal, an output terminal, a main circuit (20), an ORing field effect transistor (21), a driving circuit (23) and a switch (22). The main circuit (20) is connected between the input terminal and the output terminal. The ORing field effect transistor (21) is connected between the output terminal and the main circuit (20). The driving circuit (23) is connected with a control terminal of the ORing field effect transistor (21). The driving circuit (23) generates a control signal to control the ORing field effect transistor (21). The switch (22) is connected between the driving circuit (23) and the control terminal of the ORing field effect transistor (21). Before the power supply unit (2) is plugged into a system bus (3) of a power supply system (1), the control signal from the driving circuit (23) is bypassed by the switch (22). Consequently, the ORing field effect transistor (21) is turned off.

## Description

### FIELD OF THE INVENTION

The present disclosure relates to a power supply unit and a power supply system, and more particularly to a power supply unit and a power supply system with reduced system malfunction and improved reliability.

### BACKGROUND OF THE INVENTION

With the development of the electronics industry, power supply systems have been widely used to supply power. The power supply system usually includes a plurality of power supply units in parallel connection. In addition, the plurality of power supply units are connected with a system bus. Furthermore, an ORing device is disposed between each power supply unit and the system bus for isolation. For example, the ORing device is used to prevent the reverse current from flowing back from the system bus to the power supply unit. For example, the ORing devices may be realized with ORing field effect transistors. As the output power of the power supply system increases, the loss caused by the voltage drop of the ORing field effect transistor also increases dramatically. In order to reduce the power loss, it is necessary to reduce the on-resistance (Rdson) of the ORing field effect transistor.

However, the conventional approach to reduce the power loss is aimed to find ORing field effect transistors with lower on-resistance, or to use a plurality of ORing field effect transistors in parallel connection. However, the conventional approaches still have some drawbacks. For example, when the power supply unit is plugged into the system bus of the power supply system and not connected with an input power, the ORing field effect transistors may be unexpectedly connected and result in malfunctions because of the influence of stray parameters and the insertion speed. If the malfunctions of the ORing field effect transistors occur, the system voltage of the power supply system instantly charges internal capacitor of the plugged power supply unit. Consequently, the voltage of the power supply system drops. Under this circumstance, the power supply system is prone to crashes or malfunctions.

In another conventional approach, the characteristics of the ORing field effect transistors are carefully selected to reduce the probability of malfunction. However, this approach also brings restrictions on the use of materials, making the production of power supply unit or the power supply system difficult. In another example, the capacitance between the gate terminal and the source terminal of the ORing field effect transistor is increased to intervene in the equivalent capacitance between the gate terminal and the source terminal of the field effect transistor to reduce the probability of malfunction. However, this approach will also slow down the turn-off speed of the ORing field effect transistor, resulting in the reduced reliability of the power supply unit and the power supply system.

Therefore, it is important to provide an improved power supply unit and an improved power supply system in order to overcome the drawbacks of the conventional technologies.

### SUMMARY OF THE INVENTION

An object of the present disclosure provides a power supply unit and a power supply system. The power supply unit includes a switch. The switch is electrically connected between a driving circuit and a control terminal of an ORing field effect transistor. Before the power supply unit is plugged into a system bus of a power supply system and electrically connected with another operating power supply unit of the power supply system in parallel, the ORing field effect transistor is turned off. Since the possibility of causing malfunction of the power supply system is minimized, the reliability of the power supply system is enhanced.

In accordance with an aspect of the present disclosure, a power supply unit is provided. The power supply unit includes an input terminal, an output terminal, a main circuit, an ORing field effect transistor, a driving circuit and a switch. The input terminal selectively receives an input voltage. The main circuit is electrically connected between the input terminal and the output terminal. After the input voltage is received by the main circuit, the input voltage is converted into an output voltage by the main circuit. The ORing field effect transistor is electrically connected between the output terminal and the main circuit. The driving circuit is electrically connected with a control terminal of the ORing field effect transistor. The driving circuit detects a current from the main circuit and generates a detection result. The driving circuit generates a control signal according to the detection result. The ORing field effect transistor is controlled according to the control signal. The switch is electrically connected between the driving circuit and the control terminal of the ORing field effect transistor. Before the power supply unit is plugged into a system bus of a power supply system and electrically connected with another operating power supply unit of the power supply system in parallel and the power supply unit does not receive the input voltage, the control signal from the driving circuit is bypassed by the switch, and the control signal from the driving circuit fails be transmitted to the control terminal of the ORing field effect transistor. Consequently, the ORing field effect transistor is turned off.

In accordance with another aspect of the present disclosure, a power supply system is provided. The power supply system includes a system bus and a plurality of power supply units. The plurality of power supply units are operably plugged into the system bus. Each of the plurality of power supply units includes an input terminal, an output terminal, a main circuit, an ORing field effect transistor, a driving circuit and a switch. The input terminal selectively receives an input voltage. The main circuit is electrically connected between the input terminal and the output terminal. After the input voltage is received by the main circuit, the input voltage is converted into an output voltage by the main circuit. The ORing field effect transistor is electrically connected between the output terminal and the main circuit. The driving circuit is electrically connected with a control terminal of the ORing field effect transistor. The driving circuit detects a current from the main circuit and generates a detection result. The driving circuit generates a control signal according to the detection result. The ORing field effect transistor is controlled according to the control signal. The switch is electrically connected between the driving circuit and the control terminal of the ORing field effect transistor. A first power supply unit of the plurality of power supply units is plugged into the system bus and receives an input voltage. Before the second power supply unit is plugged into the system bus and electrically connected with the first power supply unit in parallel and the second power supply unit does not receive an input voltage, the control signal from the driving circuit of the second power supply unit is bypassed by the switch, and the control signal from the driving circuit fails be transmitted to the control terminal of the ORing field effect transistor. Consequently, the ORing field effect transistor is turned off.

In accordance with another aspect of the present disclosure, a power supply unit is provided. The power supply unit includes an input terminal, an output terminal, a main circuit, an Oring field effect transistor, a driving circuit, a reference voltage source and a switch. The main circuit is electrically connected between the input terminal and the output terminal for converting an input voltage received from the input terminal to an output voltage. The ORing field effect transistor is electrically connected between the output terminal and the main circuit. The driving circuit is electrically connected with a control terminal of the ORing field effect transistor for controlling a conduction status of the ORing field effect transistor. The switch includes a first end connected with the control terminal of the ORing field effect transistor and a second end connected with the reference voltage source. When the input terminal does not receive the input voltage, the reference voltage source provides a first voltage for conducting the switch so that the ORing field effect transistor is turned off. When the input terminal receives the input voltage, the reference voltage source provides a second voltage for not conducting the switch so that the driving circuit controls the conduction status of the ORing field effect transistor.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic circuit block diagram illustrating a power supply system according to an embodiment of the present disclosure;
FIG. 2 is a schematic circuit diagram illustrating a power supply unit of the power supply system shown in FIG. 1;
FIG. 3 schematically illustrates the waveforms of associated voltages from the first power supply unit, the second power supply unit and the ORing field effect transistor in the conventional power supply system;
FIG. 4 schematically illustrates the waveforms of associated voltages from the first power supply unit, the second power supply unit and the ORing field effect transistor in the power supply system of the present disclosure; and
FIG. 5 is a schematic circuit diagram illustrating a variant example of the switch in the power supply unit shown in FIG. 2.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

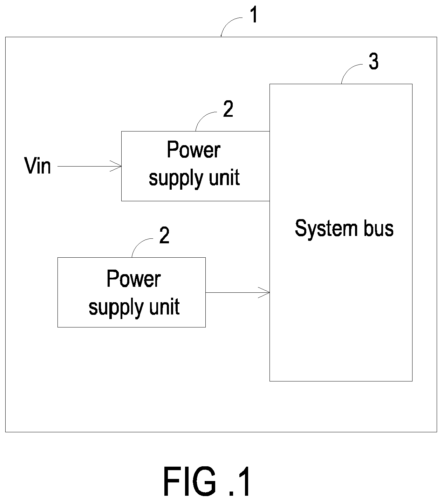

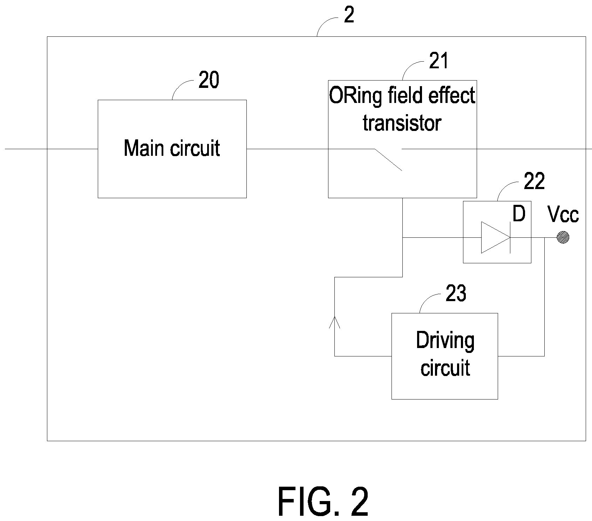

Please refer to FIGS. 1 and 2. FIG. 1 is a schematic circuit block diagram illustrating a power supply system according to an embodiment of the present disclosure. FIG. 2 is a schematic circuit diagram illustrating a power supply unit of the power supply system shown in FIG. 1. The power supply system 1 includes a plurality of power supply units 2 and a system bus 3. In this embodiment, the circuitry topologies of the plurality of power supply units 2 are identical. In the embodiment of FIG. 1, two power supply units 2 are shown. The power supply unit 2 at the upper side of the drawing is designated as a first power supply unit 2. The power supply unit 2 at the lower side of the drawing is designated as a second power supply unit 2. The first power supply unit 2 and the second power supply unit 2 can be operably plugged into and unplugged from the system bus 3. As shown in FIG. 1, the first power supply unit 2 has been plugged into the system bus 3. In addition, the first power supply unit 2 receives an input voltage Vin and operates normally. The second power supply unit 2 is ready to be plugged into the system bus 3 and connected with the first power supply unit 2 in parallel through the system bus 3. In addition, the second power supply unit 2 does not receive the input voltage Vin (e.g., not connected with an input power source, not receive a suitable voltage level). For illustration, the second power supply unit 2 is also referred as a later-plugged power supply unit.

Each power supply unit 2 includes a main circuit 20, an ORing field effect transistor 21, a switch 22 and a driving circuit 23. The input terminal of the main circuit 20 is electrically connected with the input terminal of the power supply unit 2. Moreover, the input terminal of the main circuit 20 selectively receives the input voltage Vin from an input power source, and the main circuit 20 converts the input voltage Vin received from the input terminal into an output voltage.

The ORing field effect transistor 21 includes a first terminal, a second terminal and a control terminal. The first terminal of the ORing field effect transistor 21 is electrically connected with the output terminal of the main circuit 20. The second terminal of the ORing field effect transistor 21 is electrically connected with the output terminal of the power supply unit 2. The output voltage is outputted from the output terminal of the main circuit 20 when the ORing field effect transistor 21 is conducted.

The driving circuit 23 is electrically connected with the control terminal of the ORing field effect transistor 21 for controlling a conduction status of the ORing field effect transistor 21. For example, the driving circuit 23 may detect the voltages respectively at the input terminals and the output terminals for determining whether to conduct the ORing field effect transistor 21. In another embodiment, the current from the output terminal of the main circuit 20 is detected by the driving circuit 23 for determining whether to conduct the ORing field effect transistor 21. The driving circuit 23 may transmit a control signal to and/or change the voltage level of the control signal at the control terminal of the ORing field effect transistor 21 according to the detection result. According to the control signal, the conduction status of the ORing field effect transistor 21 is correspondingly controlled. In case that the ORing field effect transistor 21 is turned off, the reverse current is prevented from flowing back from the system bus 3 to the later-plugged power supply unit 2. Moreover, in case that the driving circuit detects the power supply unit 2 is abnormal, the ORing field effect transistor 21 is turned off according to the control signal.

A first end of the switch 22 is electrically connected with the driving circuit 23 and the control terminal of the ORing field effect transistor 21 and a second end of the switch 22 is electrically connected with a reference voltage source Vcc. As mentioned above, the second power supply unit 2 does not receive the input voltage Vin, and the second power supply unit 2 is ready to be plugged into the system bus 3. In order to electrically connect the second power supply unit 2 with the first power supply unit 2 already in operation through the system bus 3, the control signal from the driving circuit 23 is bypassed by the switch 22 of the second power supply unit 2. Consequently, the control signal from the driving circuit 23 is unable to be transmitted to the control terminal of the ORing field effect transistor 21. In this way, the ORing field effect transistor 21 of the second power supply unit 2 is turned off. In an embodiment, when the input terminal of the power supply unit 2 does not receive the input voltage Vin, the reference voltage source Vcc provides a first voltage (e.g. the ground voltage level) for conducting the switch so that the ORing field effect transistor 21 is turned off. When the input terminal of the power supply unit 2 receives the input voltage Vin, the reference voltage source Vcc provides a second voltage for not conducting the switch so that the driving circuit 23 controls the conduction status of the ORing field effect transistor 21.

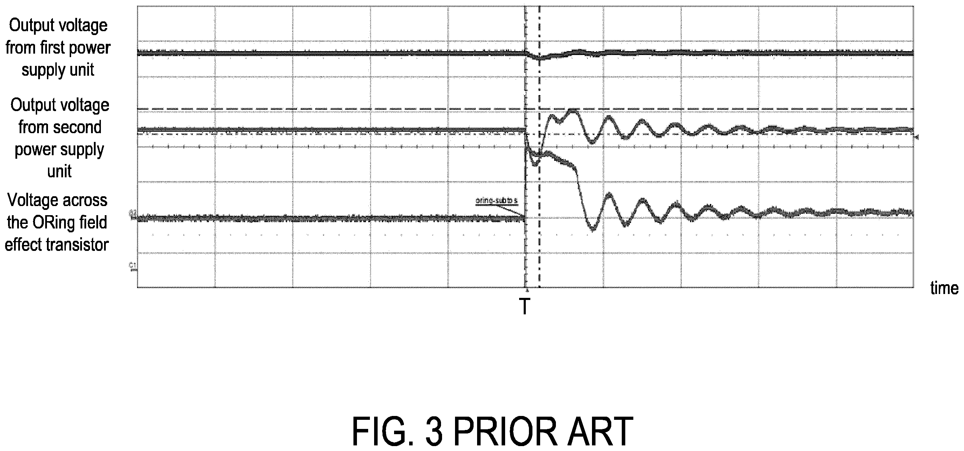

FIG. 3 schematically illustrates the waveform of the output voltage from the first power supply unit, the waveform of the output voltage from the second power supply unit and the waveform of the voltage across the ORing field effect transistor, in which the switch is not provided in the conventional power supply system. The first waveform in FIG. 3 indicates the waveform of the output voltage from the first power supply unit of the conventional power supply system. The first power supply unit is plugged into the system bus to receive the input voltage Vin and operated normally. The second waveform in FIG. 3 indicates the waveform of the output voltage from the second power supply unit of the conventional power supply system. The second power supply unit 2 is ready to be plugged into the system bus 3 and does not receive the input voltage Vin. The third waveform in FIG. 3 indicates the waveform of the voltage from the ORing field effect transistor of the first power supply unit of the conventional power supply system. At the time point T when the second power supply unit of the conventional power supply system is being plugged into the system bus, the output voltage from the second power supply unit is pulled down, and the voltage from the ORing field effect transistor of the first power supply unit is pulled up. Under this circumstance, the malfunction possibly occurs.

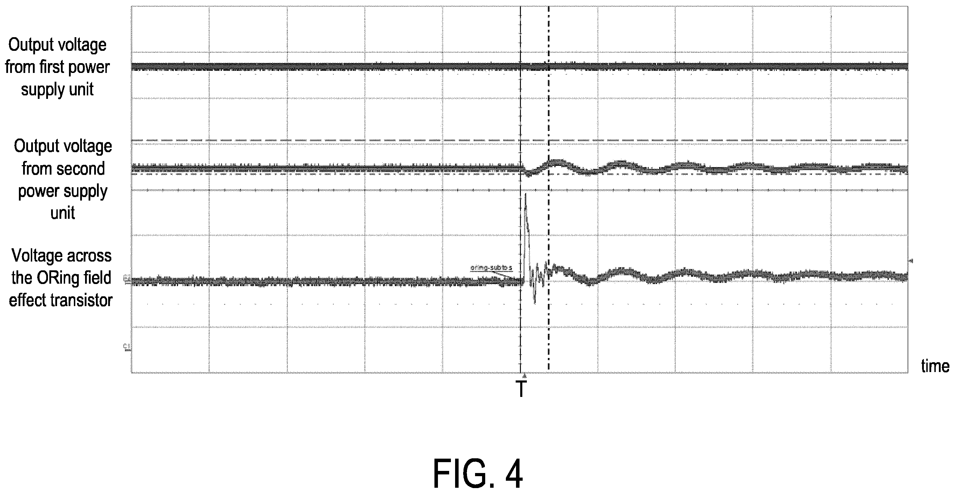

FIG. 4 schematically illustrates the waveform of the output voltage from the first power supply unit, the waveform of the output voltage from the second power supply unit and the waveform of the voltage across the ORing field effect transistor, in which the first power supply unit and the second power supply unit are included in the power supply system of the present disclosure. The first waveform in FIG. 4 indicates the waveform of the output voltage from the first power supply unit of the present power supply system. The first power supply unit is plugged into the system bus to receive the input voltage Vin and operated normally. The second waveform in FIG. 4 indicates the waveform of the voltage from the second power supply unit of the present power supply system. The second power supply unit 2 is ready to be plugged into the system bus 3 and does not receive the input voltage Vin. The third waveform in FIG. 4 indicates the waveform of the voltage across the ORing field effect transistor of the first power supply unit of the present power supply system. At the time point T when the second power supply unit 2 of the present power supply system 1 is being plugged into the system bus, the control signal from the driving circuit 23 of the second power supply unit 2 is bypassed by the switch 22 of the second power supply unit 2. Consequently, the control signal from the driving circuit 23 cannot be transmitted to the control terminal of the ORing field effect transistor 21. In this way, the ORing field effect transistor 21 of the second power supply unit 2 is turned off. Under this circumstance, the output voltage from the second power supply unit 2 can be substantially maintained at the original level, and the voltage across the ORing field effect transistor 21 can be substantially maintained at the original level.

Since the operations of the first power supply unit 2 are not influenced by the later-plugged second power supply unit 2, the increase of the output power of the power supply system 1 does not need to be taken into consideration. Furthermore, the problems of connecting the plurality of ORing field effect transistors in parallel and the problems of selecting the characteristics of the ORing field effect transistors can be effectively overcome. Since the possibility of causing malfunction of the power supply system 1 is minimized, the reliability of the power supply system is enhanced.

In an embodiment, the switch 22 is realized with a diode D. The anode of the diode D is electrically connected between the driving circuit 23 and the control terminal of the ORing field effect transistor 21. The cathode of the diode D is electrically connected with a reference voltage source Vcc inside the power supply unit 2. The supply voltage from the reference voltage source Vcc and the input voltage Vin of the power supply unit 2 are in a proportional relation. If the power supply unit 2 does not receive the input voltage Vin, the supply voltage from the reference voltage source Vcc is configured to be the first voltage level (e.g., the ground voltage level). Before the second power supply unit 2 receives the input voltage Vin and the second power supply unit 2 is plugged into the system bus 3, the supply voltage from the reference voltage source Vcc is the first voltage level and the switch 22 is conducted. The control terminal of the ORing field effect transistor 21 is therefore connected with the first voltage level. The control signal from the driving circuit 23 of the second power supply unit 2 is bypassed by the diode D in the switch 22 of the second power supply unit 2. Consequently, the control signal from the driving circuit 23 cannot be transmitted to the control terminal of the ORing field effect transistor 21 or cannot control the ORing field effect transistor 21 with the control signal. In this way, the ORing field effect transistor 21 of the second power supply unit 2 is turned off.

In an embodiment, when the control signal from the driving circuit 23 is in the high voltage level state and the switch 22 is turned off, the ORing field effect transistor 21 is turned on. When the control signal from the driving circuit 23 is in the low voltage level state, the ORing field effect transistor 21 is turned off.

In another embodiment, the switch 22 includes a Zener diode. The anode of the Zener diode is electrically connected between the driving circuit 23 and the control terminal of the ORing field effect transistor 21. The cathode of the Zener diode is electrically connected with the reference voltage source Vcc inside the power supply unit 2.

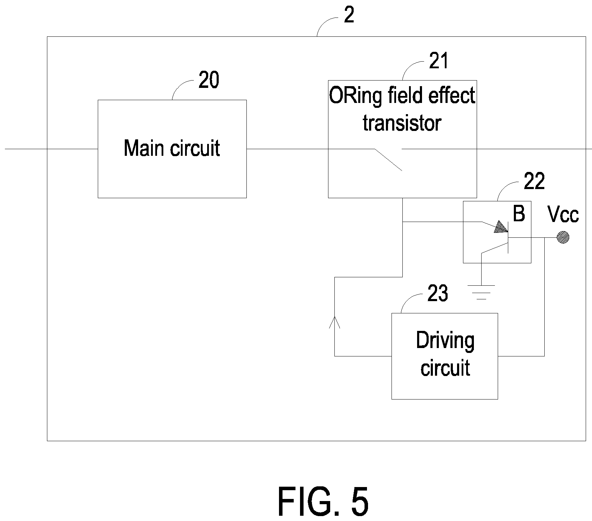

FIG. 5 is a schematic circuit diagram illustrating a variant example of the switch in the power supply unit shown in FIG. 2. In this embodiment, the switch 22 is implemented with a transistor. For example, as shown in FIG. 5, the switch 22 includes a PNP transistor B. The base of the PNP transistor B is electrically connected with the reference voltage source Vcc inside the power supply unit 2. The emitter of the PNP transistor B is electrically connected between the driving circuit 23 and the control terminal of the ORing field effect transistor. The collector of the PNP transistor B is connected with a ground terminal.

From the above descriptions, the present disclosure a power supply unit and a power supply system. The second power supply unit of the power supply system is ready to be plugged into the system bus and does not receive the input voltage. When the second power supply unit is being plugged into the system bus, the control signal from the driving circuit of the second power supply unit is bypassed by the switch of the second power supply unit. Consequently, the control signal from the driving circuit cannot be transmitted to the control terminal of the ORing field effect transistor. In this way, the ORing field effect transistor of the second power supply unit is turned off. Under this circumstance, the output voltage from the second power supply unit can be substantially maintained at the original level, and the voltage across the ORing field effect transistor can be substantially maintained at the original level. Since the operations of the first power supply unit are not influenced by the later-plugged second power supply unit, the increase of the output power of the power supply system does not need to be taken into consideration. Furthermore, the problems of connecting the plurality of ORing field effect transistors in parallel and the problems of selecting the characteristics of the ORing field effect transistors can be effectively overcome. Since the possibility of causing malfunction of the power supply system is minimized, the reliability of the power supply system is enhanced.

## Claims

1. A power supply unit (2), **characterized by** comprising:
an input terminal selectively receiving an input voltage (Vin);
an output terminal;
a main circuit (20) electrically connected between the input terminal and the output terminal, wherein after the input voltage (Vin) is received by the main circuit (20), the input voltage (Vin) is converted into an output voltage by the main circuit (20);
an ORing field effect transistor (21) electrically connected between the output terminal and the main circuit (20);
a driving circuit (23) electrically connected with a control terminal of the ORing field effect transistor (21), wherein the driving circuit (23) detects a current from the main circuit (20) and generates a detection result, wherein the driving circuit (23) generates a control signal according to the detection result, and the ORing field effect transistor (21) is controlled according to the control signal; and
a switch (22) electrically connected between the driving circuit (23) and the control terminal of the ORing field effect transistor (21),
wherein before the power supply unit (2) is plugged into a system bus (3) of a power supply system (1) and electrically connected with another operating power supply unit (2) of the power supply system (1) in parallel and the power supply unit (2) does not receive the input voltage (Vin), the control signal from the driving circuit (23) is bypassed by the switch (22), and the control signal from the driving circuit (23) fails be transmitted to the control terminal of the ORing field effect transistor (21), so that the ORing field effect transistor (21) is turned off.

2. The power supply unit (2) according to claim 1, wherein the switch (22) comprises a diode (D), wherein an anode of the diode (D) is electrically connected between the driving circuit (23) and the control terminal of the ORing field effect transistor (21), a cathode of the diode (D) is electrically connected with a reference voltage source (Vcc) inside the power supply unit (2), and a supply voltage from the reference voltage source (Vcc) and the input voltage (Vin) of the power supply unit (2) are in a proportional relation, wherein when the power supply unit (2) does not receive the input voltage (Vin), the supply voltage from the reference voltage source (Vcc) is a ground voltage level.

3. The power supply unit (2) according to claim 1, wherein when the control signal from the driving circuit (23) is in a high voltage level state and the switch (22) is turned off, the ORing field effect transistor (21) is turned on, wherein when the control signal from the driving circuit (23) is in a low voltage level state, the ORing field effect transistor (21) is turned off.

4. The power supply unit (2) according to claim 1, wherein the switch (22) comprises a PNP transistor (B), wherein a base of the PNP transistor (B) is electrically connected with a reference voltage source (Vcc) inside the power supply unit (2), an emitter of the PNP transistor (B) is electrically connected between the driving circuit (23) and the control terminal of the ORing field effect transistor (21), and a collector of the PNP transistor (B) is connected with a ground voltage level.

5. A power supply system (1), **characterized by** comprising:
a system bus (3); and
a plurality of power supply units (2) operably plugged into the system bus (3), wherein each of the plurality of power supply units (2) respectively comprises:
an input terminal selectively receiving an input voltage (Vin);
an output terminal;
a main circuit (20) electrically connected between the input terminal and the output terminal, wherein after the input voltage (Vin) is received by the main circuit (20), the input voltage (Vin) is converted into an output voltage by the main circuit (20);
an ORing field effect transistor (21) electrically connected between the output terminal and the main circuit (20);
a driving circuit (23) electrically connected with a control terminal of the ORing field effect transistor (21), wherein the driving circuit (23) detects a current from the main circuit (20) and generates a detection result, wherein the driving circuit (23) generates a control signal according to the detection result, and the ORing field effect transistor (21) is controlled according to the control signal; and
a switch (22) electrically connected between the driving circuit (23) and the control terminal of the ORing field effect transistor (21),
wherein a first power supply unit (2) of the plurality of power supply units (2) is plugged into the system bus (3) and receives an input voltage (Vin),
wherein before the second power supply unit (2) is plugged into the system bus (3) and electrically connected with the first power supply unit (2) in parallel and the second power supply unit (2) does not receive an input voltage (Vin), the control signal from the driving circuit (23) of the second power supply unit (2) is bypassed by the switch (22), and the control signal from the driving circuit (23) fails be transmitted to the control terminal of the ORing field effect transistor (21), so that the ORing field effect transistor (21) is turned off.

6. The power supply system (1) according to claim 5, wherein the switch (22) comprises a diode (D), wherein an anode of the diode (D) is electrically connected between the driving circuit (23) and the control terminal of the ORing field effect transistor (21), a cathode of the diode (D) is electrically connected with a reference voltage source (Vcc) inside each of the plurality of power supply units (2), and a supply voltage from the reference voltage source (Vcc) and the input voltage (Vin) of each of the plurality of power supply units (2) are in a proportional relation, wherein when the second power supply unit (2) does not receive the input voltage (Vin), the supply voltage from the reference voltage source (Vcc) is a ground voltage level.

7. The power supply system (1) according to claim 5, wherein when the control signal from the driving circuit (23) is in a high voltage level state and the switch (22) is turned off, the ORing field effect transistor (21) is turned on, wherein when the control signal from the driving circuit (23) is in a low voltage level state, the ORing field effect transistor (21) is turned off.

8. The power supply system (1) according to claim 5, wherein the switch (22) comprises a PNP transistor (B), wherein a base of the PNP transistor (B) is electrically connected with a reference voltage source (Vcc) inside each of the plurality of power supply units (2), an emitter of the PNP transistor (B) is electrically connected between the driving circuit (23) and the control terminal of the ORing field effect transistor (21), and a collector of the PNP transistor (B) is connected with a ground voltage level.

9. A power supply unit (2), **characterized by** comprising:
an input terminal;
an output terminal;
a main circuit (20), electrically connected between the input terminal and the output terminal, for converting an input voltage (Vin) received from the input terminal to an output voltage;
an ORing field effect transistor (21) electrically connected between the output terminal and the main circuit (20);
a driving circuit (23), electrically connected with a control terminal of the ORing field effect transistor (21), for controlling a conduction status of the ORing field effect transistor (21);
a reference voltage source (Vcc); and
a switch (22) comprising a first end connected with the control terminal of the ORing field effect transistor (21) and a second end connected with the reference voltage source (Vcc),
wherein when the input terminal does not receive the input voltage (Vin), the reference voltage source (Vcc) provides a first voltage for conducting the switch (22) so that the ORing field effect transistor (21) is turned off;
when the input terminal receives the input voltage (Vin), the reference voltage source (Vcc) provides a second voltage for not conducting the switch (22) so that the driving circuit (23) controls the conduction status of the ORing field effect transistor (21).

10. The power supply unit (2) according to claim 9, wherein the switch (22) comprises a diode (D), comprising an anode electrically connected with the control terminal of the ORing field effect transistor (21), a cathode electrically connected with the reference voltage source (Vcc); when the input terminal does not receive the input voltage (Vin), the reference voltage source (Vcc) provides the first voltage for conducting the diode (D).

11. The power supply unit (2) according to claim 9, wherein when the input terminal receives the input voltage (Vin), the reference voltage source (Vcc) provides the second voltage for not conducting the switch (22), the control signal of the driving circuit (23) is configured to be in a high voltage level state to turn on the ORing field effect transistor (21), and the control signal from the driving circuit (23) is configured to be in a low voltage level state to turn off the ORing field effect transistor (21).

12. The power supply unit (2) according to claim 9, wherein the switch (22) comprises a PNP transistor (B), wherein a base of the PNP transistor (B) is electrically connected with the reference voltage source (Vcc), an emitter of the PNP transistor (B) is electrically connected with the control terminal of the ORing field effect transistor (21), and a collector of the PNP transistor (B) is connected with a ground voltage level.
